# FASCICULE DE BREVET EUROPEEN

(11) **EP 0 870 635 B1**
(45) Date de publication et mention de la délivrance du brevet: **19.06.2002**
(21) Numéro de dépôt: 98400821.9
(22) Date de dépôt: 06.04.1998
(51) Int. Cl.: B60H 1/00, B60K 37/06

(54) **Bouton de commande à usure réduite pour chauffage de véhicule**
Regelknopf mit vermindertem Verschleiss für eine Fahrzeugheizung
Control knob with reduced wear for a vehicle heating system

(30) Priorité: 10.04.1997 FR 9704419
(43) Date de publication de la demande: 14.10.1998
(73) Titulaire: AFE Plasturgie, 95580 Andilly (FR)
(72) Inventeur: Perrigouard, Christophe, 72230 Guecelard (FR)
(74) Mandataire: Rousset, Jean-Claude

(56) Documents cités:
- FR-A- 2 082 268
- GB-A- 1 030 804
- US-A- 5 245 886

## Description

L'invention concerne un tableau de commande, notamment pour installation de chauffage/ventilation ou de climatisation de véhicule, comprenant un organe de manoeuvre monté sur une structure fixe de manière à se déplacer dans une première direction, une piste appartenant à la structure fixe, allongée dans la première direction, un élément d'arrêt solidaire d'une lame flexible élastiquement et faisant saillie par rapport à une première face de la lame, tournée vers ladite piste, dans une seconde direction transversale à la première, ladite lame étant reliée à l'organe de manoeuvre de manière à se déplacer avec celui-ci et sollicitant élastiquement l'élément d'arrêt contre la piste tout en l'entraînant le long de celle-ci lors du déplacement de l'organe de manoeuvre, la piste présentant, en au moins un endroit de sa longueur, une dépression propre à loger l'élément d'arrêt pour maintenir l'organe de manoeuvre dans une position privilégiée.

Dans de tels tableaux de commande, l'organe de manoeuvre est de manière habituelle un bouton monté rotatif sur la façade du tableau de commande de manière à être manoeuvrable à la main par un utilisateur. Ce bouton sert par exemple à établir un circuit électrique de configuration variable, notamment pour faire tourner un ventilateur à différentes vitesses. A chaque position privilégiée, aisément repérable par l'utilisateur grâce au crantage fourni par la dépression, correspondent alors une configuration particulière du circuit d'alimentation et une vitesse déterminée du ventilateur.

Pour réaliser l'élément d'arrêt en saillie, il est connu de déformer localement par emboutissage la lame élastique qui se présente sous la forme d'un disque métallique. Le frottement sur la piste du disque ainsi déformé conduit à une usure rapide de cette dernière, qui est habituellement formée sur une pièce en matière plastique moulée, notamment sur la face arrière de la façade du tableau de commande. Il est également connu d'utiliser comme élément d'arrêt un galet en élastomère monté rotatif sur un arbre lui-même solidarisé au disque constituant la lame élastique et s'étendant radialement par rapport à celui-ci. La réalisation d'un tel élément d'arrêt est complexe et coûteuse.

On désigne ici par "face avant" la face de la façade tournée vers l'utilisateur du tableau de commande, et les termes "avant" et "arrière" se réfèrent à cette convention. Il est à noter que, dans le cas d'un tableau de commande de chauffage de véhicule, la face avant est généralement tournée vers l'arrière du véhicule.

Le but de l'invention est de remédier aux inconvénients précités, et de fournir un élément d'arrêt de réalisation simple et économique ne provoquant qu'une faible usure de la piste associée.

L'invention vise notamment un tableau de commande du genre défini en introduction, et prévoit que l'élément d'arrêt est formé par une bille sertie sur la lame et propre à tourner sur elle-même pour rouler sur la piste lors dudit déplacement.

US 5 245 886A décrit un tableau de commande analogue, dans lequel l'élément d'arrêt est constitué par une bille et supporté de manière mobile dans un corps massif et rigide.

GB 1 030 804A décrit un élément d'arrêt qui peut être une bille maintenue dans une ouverture d'une plaque par des pièces supplémentaires, sans sertissage.

Des caractéristiques optionnelles de l'invention, complémentaires ou alternatives, sont énoncées ci-après:
- La bille s'étend au-delà de ladite première face sur une distance supérieure à son rayon.
- La lame s'étend selon une surface régulière et la bille est maintenue en place sur la lame par des pattes appartenant à celle-ci, à savoir au moins une patte repliée d'un côté et au moins deux pattes repliées de l'autre côté de ladite surface.
- La lame présente trois pattes disposées à des distances angulaires mutuelles d'environ 120 ° autour d'un axe perpendiculaire à ladite surface et passant par le centre de la bille.
- Une seule des pattes est tournée du côté de la piste, cette patte venant en contact avec la bille en une zone plus éloignée de ladite surface que le centre de la bille.
- Ladite patte tournée du côté de la piste est écartée de celle-ci dans la direction perpendiculaire aux première et seconde directions.
- La bille est en résine acétal, ce qui permet de réduire encore l'usure et le bruit par rapport à des billes en acier.
- La piste est constituée par la crête d'une nervure.
- La piste ou la nervuré est formée sur la face arrière d'une façade du tableau de commande sur laquelle est monté l'organe de manoeuvre.
- L'organe de manoeuvre est un bouton rotatif.
- La lame élastique est sensiblement sous la forme d'un disque s'étendant dans un plan perpendiculaire à l'axe du bouton.
- Deux billes d'arrêt sont montées sur la lame, sur des rayons opposés du disque.
- Les deux billes sont à des distances différentes de l'axe du bouton et coopèrent avec des pistes circonférentielles concentriques de rayons différents.
- L'organe de manoeuvre porte au moins un élément de contact électrique propre à venir en contact, en fonction de la position de l'organe de manoeuvre, avec une plage parmi au moins deux plages conductrices prévues sur la structure fixe, pour établir un circuit électrique de configuration variable, deux plages voisines étant séparées par un intervalle étroit auquel est associée une zone de la piste inclinée par rapport aux première et seconde directions de telle sorte que, pour toute position de l'organe de manoeuvre dans laquelle l'élément de contact se trouve au moins en partie en regard de l'intervalle, la bille est en contact avec ladite zone inclinée et tend à rouler sur celle-ci, sous l'action élastique de la lame, jusqu'au fond de la dépression correspondant à une position privilégiée dans laquelle l'élément de contact se trouve entièrement en regard de l'une des deux plages.

Les caractéristiques et avantages de l'invention seront exposés plus en détail dans la description ci-après, en se référant aux dessins annexés, sur lesquels:
- la figure 1 est une vue partielle d'un tableau de commande selon l'invention, en coupe longitudinale par un plan contenant l'axe d'un bouton rotatif;
- la figure 2 est une vue d'arrière d'un disque portant deux billes d'arrêt, associé à ce bouton rotatif;
- les figures 3 et 4 sont respectivement une vue radiale et une vue partielle radiale du disque, montrant une bille sertie; et
- les figures 5 et 6 sont des schémas explicatifs relatifs aux déplacements conjoints d'une bille d'arrêt et d'un plot de contact électrique porté par le bouton rotatif.

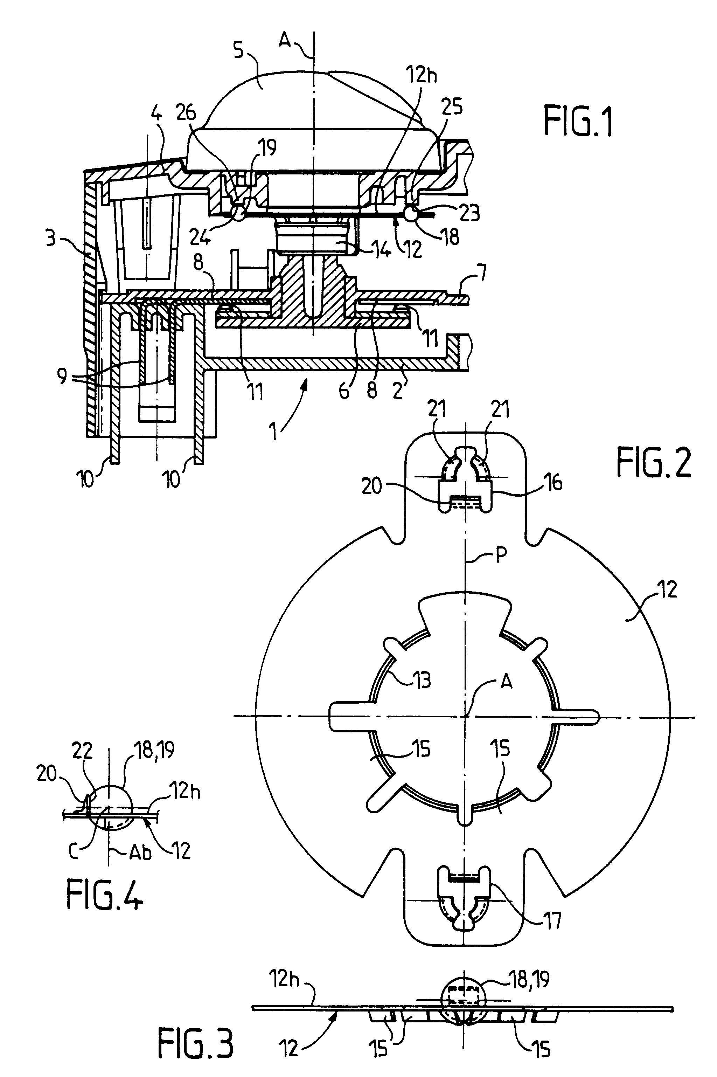

Le tableau de commande représenté sur la figure 1 comprend un boîtier formé de deux pièces principales, dont l'une 1 a la forme générale d'un bac à contour rectangulaire, présentant un fond généralement plan 2 appelé aussi platine, deux parois longitudinales opposées et deux parois d'extrémités dont l'une est représentée sous la référence 3. La seconde pièce 4, appelée ci-après façade, constitue un couvercle fermant le bac 1 et assemblée aux parois longitudinales et d'extrémités de celui-ci, par exemple par soudage aux ultrasons.

La figure 1 montre un bouton de manoeuvre 5 monté de façon classique sur la façade 4 de manière à être manoeuvré par un utilisateur pour tourner autour d'un axe A perpendiculaire au plan général de la platine 2. Le bouton 5 est proche de la paroi d'extrémité 3 et d'autres boutons non représentés peuvent être disposés entre celui-ci et la paroi d'extrémité opposée. Le bouton 5 est solidaire en rotation d'un disque 6 disposé à l'intérieur du boîtier, et plus précisément entre la platine 2 et une plaque intermédiaire 7 s'étendant sensiblement parallèlement au plan général de la platine. La plaque porte sur sa face arrière, tournée vers la platine, des feuilles métalliques 8 reliées à une multiplicité de broches de connexion 9 s'étendant vers l'arrière à partir de la plaque 7. L'ensemble des broches 9 est entouré par une jupe annulaire 10 appartenant à la pièce 1 du boîtier, définissant un logement pour un connecteur femelle non représenté destiné au raccordement électrique du tableau de commande.

Le disque 6 est guidé en rotation dans un palier formé sur la plaque 7. Il porte sur sa face arrière deux plots de contact électrique 11 diamétralement opposés et reliés électriquement entre eux, destinés à venir en contact électrique avec des plages conductrices définies par les feuilles 8. Par exemple, l'un des plots peut venir en contact, selon la position angulaire du bouton 5, avec différentes plages reliées, par des résistances électriques de valeurs différentes, au moteur d'entraînement d'un ventilateur, tandis que l'autre plot reste en contact avec une autre plage, toujours la même, d'étendue circonférentielle plus grande que les précédentes, et reliée à la source d'alimentation électrique du ventilateur. Les moyens d'arrêt décrits ci-après définissent des positions privilégiées du bouton, pour chacune desquelles le premier plot 11 est en contact avec une plage conductrice déterminée, et par conséquent le ventilateur est entraîné à une vitesse déterminée.

Les moyens d'arrêt comprennent une lame ressort en acier 12 ayant la forme générale d'un disque, enfilée par une ouverture centrale 13 sur le fût 14 du bouton 5 et immobilisée sur celui-ci par des languettes 15, ménagées sur la périphérie de l'ouverture 13, de façon à s'étendre sensiblement dans un plan perpendiculaire à l'axe A. Deux ouvertures plus petites 16 et 17 sont découpées dans le disque 12, en des positions opposées par rapport à l'ouverture 13, pour loger respectivement des billes 18 et 19, l'ouverture 16 étant plus éloignée de l'axe A que l'ouverture 17. A chacune des ouverture 16, 17 sont associées trois pattes écartées les unes des autres le long de la périphérie de l'ouverture, à savoir une patte 20 plus proche de l'ouverture centrale 13 et deux pattes 21 plus éloignées de celle-ci. Chaque patte 20 est symétrique par rapport à un plan P passant par l'axe A et par les centres des ouvertures 16 et 17, et les deux pattes 21 de chaque ouverture sont symétriques l'une de l'autre par rapport à ce même plan, ces trois pattes étant disposées sensiblement à des distances angulaires mutuelles de 120 ° autour d'un axe Ab perpendiculaire au plan du disque et passant par le centre C de la bille. La patte 20 et les pattes 21 sont recourbées au-dessus et au-dessous respectivement du plan du disque 12, comme vu sur les figures 1, 3 et 4, c'est-à-dire vers l'avant et vers l'arrière du tableau de commande, de manière à venir en contact avec la bille 18, 19 au-dessus et au-dessous du disque pour la maintenir en place, seul étant permis un mouvement de rotation de la bille sur elle-même. Le centre C de la bille est alors situé au-dessus de la face supérieure 12h du disque. La patte 20 vient en contact avec la bille notamment en une zone 22 plus éloignée du disque que le centre C, de façon à empêcher la bille de s'échapper de l'ouverture 16, 17 vers le haut.

Le disque 12, grâce à son élasticité, applique les billes 18 et 19 sur des pistes respectives constituées par les crêtes de deux nervures annulaires 25 et 26 formées sur la face interne ou arrière de la façade 4. Ces nervures s'étendent en hauteur parallèlement à l'axe A et en longueur selon des cercles ou des arcs de cercle centrés sur celui-ci, dont les rayons correspondent aux distances respectives entre les ouvertures 16 et 17 et le centre de l'ouverture 13. De façon connue, les nervures 25 et 26 présentent des échancrures destinées à recevoir les billes 18 et 19 lorsque le bouton 5 se trouve dans ses positions privilégiées.

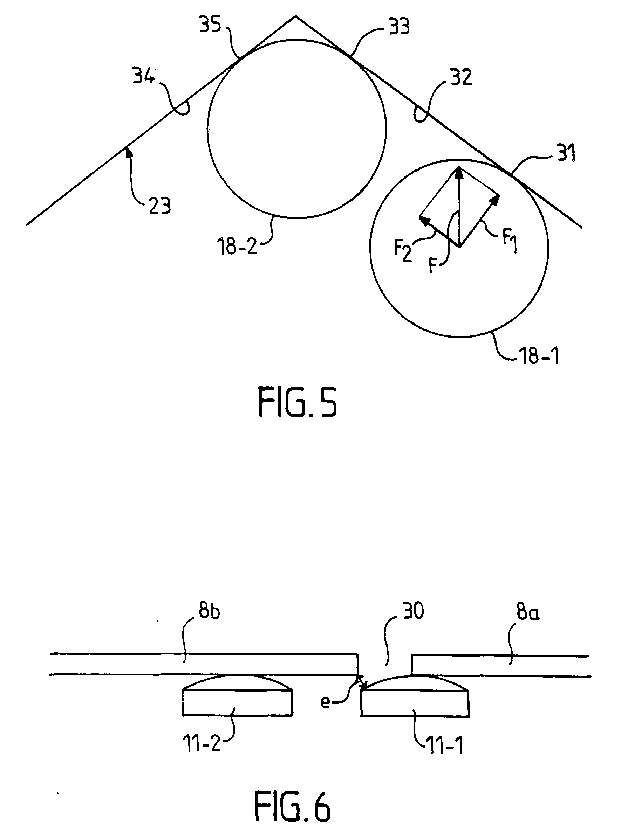

La figure 5 montre schématiquement la bille 18 dans deux positions différentes 18-1 et 18-2 le long de la piste 23 qui lui est associée. La figure 6 montre schématiquement un plot de contact 11 dans deux positions différentes 11-1 et 11-2 par rapport à deux plages conductrices 8a et 8b séparées par un intervalle 30. Dans la position 18-1, la bille est en contact avec la piste 23 en un seul point 31 de la longueur de celle-ci, dans une zone 32 de la piste qui est inclinée par rapport à l'axe A. La force élastique F exercée sur la bille par le disque 12, orientée verticalement vers le haut comme vu sur les figures 1 et 5, est donc décomposée en une force d'appui F₁ orientée perpendiculairement à la pente de la zone 32 et en une force F₂ parallèle à cette pente, qui fait rouler la bille vers le haut et vers la gauche de la figure 5 jusqu'à la position 18-2 où elle est en contact avec la zone 32 en un point 33, et avec une zone 34 de pente opposée en un point 35, occupant ainsi le fond d'une entaille délimitée par les zones inclinées 32 et 34. La position 18-1 de la bille correspond à la position 11-1 du plot de contact, dans laquelle celui-ci est en contact avec la plage 8a, au voisinage immédiat de l'intervalle 30, et se trouve en partie en regard de ce dernier. La distance minimale e entre le plot et la plage 8b est alors très réduite, sensiblement inférieure à la largeur de l'intervalle 30. Si le plot restait dans cette position, il pourrait en résulter la formation d'un arc électrique entre celui-ci et la plage 8b. Au contraire, le déplacement de la bille jusqu'à la position 18-2 amène le plot dans la position 11-2 où il se trouve entièrement en regard de la plage 8b.

L'invention n'est pas limitée à l'exemple décrit. En particulier, l'organe de manoeuvre peut présenter une autre forme que celle d'un bouton rotatif se déplaçant dans une direction circonférentielle, par exemple celle d'un curseur se déplaçant linéairement. La lame élastique peut porter une seule bille. La piste sur laquelle roule la bille peut présenter un profil courbe exempt d'angles.

L'invention est utilisable dans tous les cas où l'on souhaite définir des positions privilégiées pour un organe de manoeuvre, que celui-ci serve ou non à établir des contacts électriques. Il est également possible de ménager, en dehors des dépressions de la piste de roulement, des zones où celle-ci est à un niveau constant de manière à permettre un réglage continu de la position de l'organe de manoeuvre.

## Revendications

1. Tableau de commande, notamment pour installation de chauffage/ventilation ou de climatisation de véhicule, comprenant un organe de manoeuvre (5) monté sur une structure fixe (1, 4, 7) de manière à se déplacer dans une première direction, une piste (23, 24) appartenant à la structure fixe, allongée dans la première direction, un élément d'arrêt (18, 19) solidaire d'une lame (12) flexible élastiquement et faisant saillie par rapport à une première face (12h) de la lame, tournée vers ladite piste, dans une seconde direction transversale à la première, ladite lame étant reliée à l'organe de manoeuvre de manière à se déplacer avec celui-ci et sollicitant élastiquement l'élément d'arrêt contre la piste tout en l'entraînant le long de celle-ci lors du déplacement de l'organe de manoeuvre, la piste présentant, en au moins un endroit de sa longueur, une dépression (32, 34) propre à loger l'élément d'arrêt pour maintenir l'organe de manoeuvre dans une position privilégiée, **caractérisé en ce que** l'élément d'arrêt est formé par une bille (18, 19) sertie sur la lame et propre à tourner sur elle-même pour rouler sur la piste lors dudit déplacement.

2. Tableau de commande selon la revendication 1, dans lequel la bille s'étend au-delà de ladite première face (12h) sur une distance supérieure à son rayon.

3. Tableau de commande selon l'une des revendications 1 et 2, dans lequel la lame s'étend selon une surface régulière et la bille est maintenue en place sur la lame par des pattes appartenant à celle-ci, à savoir au moins une patte (20) repliée d'un côté et au moins deux pattes (21) repliées de l'autre côté de ladite surface.

4. Tableau de commande selon la revendication 3, dans lequel la lame présente trois pattes disposées à des distances angulaires mutuelles d'environ 120 ° autour d'un axe (Ab) perpendiculaire à ladite surface et passant par le centre (C) de la bille.

5. Tableau de commande selon la revendication 4, rattachée à la revendication 2, dans lequel une seule (20) des pattes est tournée du côté de la piste, cette patte venant en contact avec la bille en une zone (22) plus éloignée de ladite surface que le centre de la bille.

6. Tableau de commande selon la revendication 5, dans lequel ladite patte (20) tournée du côté de la piste est écartée de celle-ci dans la direction perpendiculaire aux première et seconde directions.

7. Tableau de commande selon l'une des revendications précédentes, dans lequel la bille est en résine acétal.

8. Tableau de commande selon l'une des revendications précédentes, dans lequel la piste est constituée par la crête (23, 24) d'une nervure (25, 26).

9. Tableau de commande selon l'une des revendications précédentes, dans lequel la piste ou la nervure est formée sur la face arrière d'une façade (4) du tableau de commande sur laquelle est monté l'organe de manoeuvre (5).

10. Tableau de commande selon l'une des revendications précédentes, dans lequel l'organe de manoeuvre est un bouton rotatif.

11. Tableau de commande selon la revendication 10, dans lequel la lame élastique est sensiblement sous la forme d'un disque s'étendant dans un plan perpendiculaire à l'axe (A) du bouton.

12. Tableau de commande selon la revendication 11, dans lequel deux billes d'arrêt (18, 19) sont montées sur la lame (12), sur des rayons opposés du disque.

13. Tableau de commande selon la revendication 12, dans lequel les deux billes sont à des distances différentes de l'axe du bouton et coopèrent avec des pistes circonférentielles concentriques de rayons différents.

14. Tableau de commande selon l'une des revendications précédentes, dans lequel l'organe de manoeuvre porte au moins un élément de contact électrique (11) propre à venir en contact, en fonction de la position de l'organe de manoeuvre, avec une plage parmi au moins deux plages conductrices (8a, 8b) prévues sur la structure fixe, pour établir un circuit électrique de configuration variable, deux plages voisines (8a, 8b) étant séparées par un intervalle étroit (30) auquel est associée une zone (32) de la piste inclinée par rapport aux première et seconde directions de telle sorte que, pour toute position de l'organe de manoeuvre dans laquelle l'élément de contact se trouve au moins en partie en regard de l'intervalle, la bille (18) est en contact avec ladite zone inclinée et tend à rouler sur celle-ci, sous l'action élastique de la lame, jusqu'au fond de la dépression correspondant à une position privilégiée dans laquelle l'élément de contact (11) se trouve entièrement en regard de l'une des deux plages (8b).

## Patentansprüche

1. Bedienfeld, insbesondere für eine Heizungs-/Belüftungs- oder Klimaanlage eines Fahrzeugs, enthaltend ein Stellglied (5), das auf einer festen Struktur (1, 4, 7) so angebracht ist, daß es sich in einer ersten Richtung verstellen kann, eine Bahn (23, 24), die zu der festen Struktur gehört und sich in der ersten Richtung erstreckt, ein Sperrelement (18, 19), das an einem elastisch biegbaren Blech (12) angebracht ist und gegenüber einer ersten Seite (12h) des Blechs vorsteht und gegen die genannte Bahn in einer quer zur ersten Richtung verlaufenden, zweiten Richtung weist, wobei das Blech mit dem Stellglied derart verbunden ist, daß es sich mit diesem verstellt und das Sperrelement gegen die Bahn drückt und es dabei längs dieser bei der Verstellung des Stellglieds mitnimmt, die Bahn an wenigstens einer Stelle ihrer Längserstreckung eine Vertiefung (32, 34) aufweist, die zur Aufnahme des Sperrelements geeignet ist, um das Stellglied in einer Vorzugsstellung zu halten, **dadurch gekennzeichnet, daß** das Sperrelement von einer Kugel (18, 19) gebildet ist, die in das Blech eingesetzt und dazu eingerichtet ist, sich um sich selbst zu drehen, um bei der genannten Verstellung auf der Bahn zu rollen.

2. Bedienfeld nach Anspruch 1, bei dem die Kugel sich über die genannte erste Seite (12h) über eine Distanz hinaus erstreckt, die größer als ihr Radius ist.

3. Bedienfeld nach einem Ansprüche 1 und 2, bei dem sich das Blech in einer regelmäßigen Oberfläche erstreckt und die Kugel auf dem Blech durch zu diesem gehörende Fahnen am Platz gehalten ist, nämlich durch wenigstens eine Fahne (20), die zur einen Seite von der genannten Oberfläche weggebogen ist, und wenigstens zwei Fahnen (21), die zur anderen Seite von der genannten Oberfläche weggebogen sind.

4. Bedienfeld nach Anspruch 3, bei dem das Blech drei Fahnen aufweist, die in gegenseitigen Winkelabständen von etwa 120° um eine Achse (Ab) angeordnet sind, die senkrecht zu der genannten Oberfläche und durch das Zentrum (C) der Kugel verläuft.

5. Bedienfeld nach Anspruch 4, wenn abhängig von Anspruch 2, bei dem eine einzige (20) der Fahnen in Richtung auf die Bahn gebogen ist und mit der Kugel in einer Zone (22) in Berührung gelangt, die von der Oberfläche weiter entfernt ist, als das Zentrum der Kugel.

6. Bedienfeld nach Anspruch 5, bei dem die genannte Fahne (20), die zur Seite der Bahn gebogen ist, von dieser in der Richtung senkrecht zu den ersten und zweiten Richtungen einen Abstand hat.

7. Bedienfeld nach einem der vorhergehenden Ansprüche, bei dem die Kugel aus Acetalkunstharz besteht.

8. Bedienfeld nach einem der vorhergehenden Ansprüche, bei dem die Bahn vom Scheitel (23, 24) einer Rippe (25, 26) gebildet ist.

9. Bedienfeld nach einem der vorhergehenden Ansprüche, bei dem die Bahn oder die Rippe auf der Rückseite einer Frontplatte (4) des Bedienfeldes ausgebildet ist, an der das Stellglied (5) angebracht ist.

10. Bedienfeld nach einem der vorhergehenden Ansprüche, bei dem das Stellglied ein Drehknopf ist.

11. Bedienfeld nach Anspruch 10, bei dem das elastische Blech im wesentlichen die Form einer Scheibe hat, die sich in einer Ebene erstreckt, die senkrecht zur Achse (A) des Knopfs verläuft.

12. Bedienfeld nach Anspruch 11, bei dem zwei Sperrkugeln (18, 19) an dem Blech (12) auf einander gegenüberliegenden Radien der Scheibe angebracht sind.

13. Bedienfeld nach Anspruch 12, bei dem die zwei Kugeln unterschiedlicher Abstände von der Achse des Knopfes haben und mit konzentrischen Kreisbahnen unterschiedlicher Radien zusammenwirken.

14. Bedienfeld nach einem der vorhergehenden Ansprüche, bei dem das Stellglied wenigstens ein elektrisches Kontaktelement (11) trägt, das dazu geeignet ist, in Abhängigkeit von der Stellung des Stellgliedes mit einem Leiter von wenigstens zwei Leitern (8a, 8b) in Kontakt zu gelangen, die auf der festen Struktur angeordnet sind, um einen elektrischen Stromkreis variabler Konfiguration einzurichten, wobei zwei benachbarte Leiter (8a, 8b) durch einen schmalen Zwischenraum (30) voneinander getrennt sind, dem eine Zone (32) der gegenüber den ersten und zweiten Richtungen geneigten Bahn derart zugeordnet ist, daß für jede Stellung des Stellgliedes, in der das Kontaktelement wenigstens teilweise dem Zwischenraum gegenüber steht, die Kugel (18) mit der genannten geneigten Zone in Berührung ist und dazu neigt, auf dieser unter der elastischen Wirkung des Blechs bis in den Grund der entsprechenden Vertiefung in eine Vorzugsstellung zu rollen, in der das Kontaktelement (11) dem einen der beiden Leiter (8b) vollständig gegenübersteht.

## Claims

1. Control panel, in particular for a heating/ventilation or air-conditioning installation in a vehicle, comprising a control element (5) mounted on a fixed structure (1, 4, 7) so as to move in a first direction, a track (23, 24) forming part of the fixed structure and extending in the first direction, a stop element (18, 19) rigidly connected to a resiliently flexible blade (12) and projecting from a first face (12h) of the blade, turned towards the track, in a second direction transverse to the first, the blade being connected to the control element so as to move therewith and resiliently stressing the stop element against the track whilst driving the stop element along the track during movement of the control element, the track having in at least one part of its length a depression (32, 34) capable of housing the stop element in order to keep the control element in an overriding position, **characterised in that** the stop element is formed by a ball (18, 19) crimped on the blade and capable of turning on itself in order to roll along the track during the aforementioned displacement.

2. Control panel according to claim 1, wherein the ball extends beyond the first face (12h) over a distance greater than its radius.

3. Control panel according to either of claims 1 or 2, wherein the blade extends over a smooth surface and the ball is held in place on the blade by tabs forming part of the latter, i.e. there are at least one tab (20) folded back on one side and at least two tabs (21) folded back on the other side of the aforementioned surface.

4. Control panel according to claim 3, wherein the blade has three tabs disposed at mutual angular intervals of about 120° about an axis (Ab) perpendicular to the surface and passing through the centre (C) of the ball.

5. Control panel according to claim 4, in association with claim 2, wherein one (20) of the tabs faces the track, this tab coming into contact with the ball in a region (22) more remote from the surface than the centre of the ball.

6. Control panel according to claim 5, wherein the tab (20) facing the track is spaced therefrom in the direction perpendicular to the first and second directions.

7. Control panel according to one of the preceding claims, wherein the ball is made of acetal resin.

8. Control panel according to one of the preceding claims, wherein the track is formed by the ridge (23, 24) of a reinforcement (25, 26).

9. Control panel according to one of the preceding claims, wherein the track or reinforcement is formed on the rear face of a façade (4) of the control panel on which the control element (5) is mounted.

10. Control panel according to one of the preceding claims, wherein the control element is a rotary knob.

11. Control panel according to claim 10, wherein the resilient blade is substantially in the form of a disc extending in a plane perpendicular to the axis (A) of the knob.

12. Control panel according to claim 11, wherein two stop balls (18, 19) are mounted on the blade (12) on opposing radii of the disc.

13. Control panel according to claim 12, wherein the two balls are at different distances from the axis of the knob and co-operate with concentric circumferential tracks of different radii.

14. Control panel according to one of the preceding claims, wherein the control element has at least one electrical contact element (11) capable of coming into contact, according to the position of the control element, with one area out of at least two conducting areas (8a, 8b) provided on the fixed structure, in order to establish an electric circuit of variable configuration, two adjacent areas (8a, 8b) being separated by a narrow interval (30) with which is associated a region (32) of the track which is inclined relative to the first and second directions, in such a manner that, for any position of the control element in which the contact element is located at least partly opposite the interval, the ball (18) is in contact with the inclined region and rolls thereon, under the resilient action of the blade, as far as the bottom of the depression corresponding to an overriding position in which the contact element (11) is located fully opposite one of the two areas (8b).
